# FASCICULE DE BREVET EUROPEEN

(11) **EP 3 393 897 B1**
(45) Date de publication et mention de la délivrance du brevet: **04.12.2019**
(21) Numéro de dépôt: 16819468.6
(22) Date de dépôt: 12.12.2016
(51) Int. Cl.: B62K 3/00, B60K 1/04, B62K 11/00

(54) **GYROPODE OU TRANSPORTEUR PERSONNEL**
SELBSTAUSGLEICHENDER ROLLER ODER PERSONENTRANSPORTER
SELF-BALANCING SCOOTER OR PERSONAL TRANSPORTER

(30) Priorité: 21.12.2015 FR 1562938
(43) Date de publication de la demande: 31.10.2018
(73) Titulaire: Universite Paris-Sud, 91400 Orsay (FR)
(72) Inventeur: MARTINELLI, Pascal, 92330 Sceaux (FR); RAYNAUD, Gilles, 91440 Bures-sur-yvette (FR)
(74) Mandataire: Decorchemont, Audrey Véronique Christèle
(86) Numéro de dépôt international: PCT/EP2016/080653
(87) Numéro de publication internationale: WO 2017/108481

(56) Documents cités:
- WO-A1-2012/171821
- WO-A1-2015/188599
- WO-A2-2015/121754
- CN-A- 101 074 039
- US-A1- 2013 238 231
- US-A1- 2015 096 820

## Description

### ARRIERE-PLAN TECHNOLOGIQUE DE L'INVENTION

On connaît du document FR 2 976 548 un gyropode comportant une plateforme flanquée de deux roues et munie d'un manche de maintien et de conduite, ainsi que d'un organe de stabilisation gyroscopique agissant sur des moteurs d'entraînement des roues pour assurer l'équilibre et le déplacement du gyropode. Chacune des roues comporte une jante qui coopère avec des paliers portés par des supports respectifs en forme de croissant qui s'étendent chacun essentiellement en regard de la jante associée et qui portent le moteur d'entraînement associé de sorte que celui-ci entraîne la roue associée en agissant sur la jante, les supports étant fixés sur les côtés de la plateforme. Ainsi, chaque moteur d'entraînement peut coopérer directement (par friction ou par engrènement) avec la jante de la roue associée, ce qui offre naturellement un grand rapport de réduction permettant d'économiser un réducteur. Dans le gyropode illustré dans ce document, la plateforme comporte un marchepied porté par des traverses qui s'étendent entre les supports en étant fixées à ces derniers. Il est précisé qu'un pack de batteries est porté par ces traverses pour alimenter les moteurs.

On connaît par ailleurs du document WO 2015/121754 une mono-roue électrique. Ladite mono-roue comporte un marchepied fixe présentant des évidements pour la réception de packs de batteries.

### OBJET DE L'INVENTION

L'invention vise à encore simplifier la conception d'un gyropode et en améliorer la facilité d'utilisation.

### PRESENTATION DE L'INVENTION

En vue de la réalisation de ce but, on propose un gyropode comportant une plateforme, deux roues latérales, ainsi qu'un dispositif de stabilisation gyroscopique agissant sur des moteurs d'entraînement des roues. Selon l'invention, le gyropode comporte un boîtier recevant une batterie d'alimentation des moteurs et fermé par un couvercle, le boîtier étant reçu de façon amovible sur la plateforme du gyropode de sorte que le couvercle forme un marchepied du gyropode sur lequel l'utilisateur monte en service.

Ainsi, le boîtier remplit une double fonction de stockage de la batterie et de marchepied, et peut être facilement retiré pour le rechargement, un autre boîtier contenant une batterie chargée pouvant être adapté sur le gyropode en lieu et place du boîtier retiré. Les boîtiers peuvent être stockés et mis en charge, par exemple sur des supports fixés aux murs.

De la sorte, le boîtier dans son intégralité, et donc le couvercle y compris, est amovible du reste de la plateforme ce qui permet très facilement de changer la batterie d'alimentation. En particulier, le couvercle du boîtier forme seul le marchepied du gyropode et vient avec le reste du boîtier quand celui-ci est retiré de la plateforme.

Dans le document FR 2 976 548, il n'est question que d'un marchepied fixe. De même dans le document WO 2015/121754, le marchepied est fixe et seuls les packs de batteries peuvent être retirés de la plateforme, et un par un seulement.

Au contraire, dans l'invention, le boîtier remplit une double fonction de stockage de la batterie et de marchepied et peut être retiré d'un bloc, ce qui entraîne évidemment le retrait du marchepied dans son intégralité.

Selon un mode de réalisation particulier, chacune des roues du gyropode comporte une jante qui coopère avec des paliers portés par des supports respectifs en forme de croissant qui s'étendent chacun essentiellement en regard de la jante associée et qui portent le moteur d'entraînement associé de sorte que celui-ci entraîne la roue associée en agissant sur la jante, les supports s'étendant sur les côtés de la plateforme et étant reliés entre eux par des traverses qui portent le boîtier.

### PRESENTATION DES FIGURES

L'invention sera mieux comprise à la lumière de la description qui suit d'un mode particulier de réalisation de l'invention, en référence aux figures des dessins annexés, parmi lesquelles :

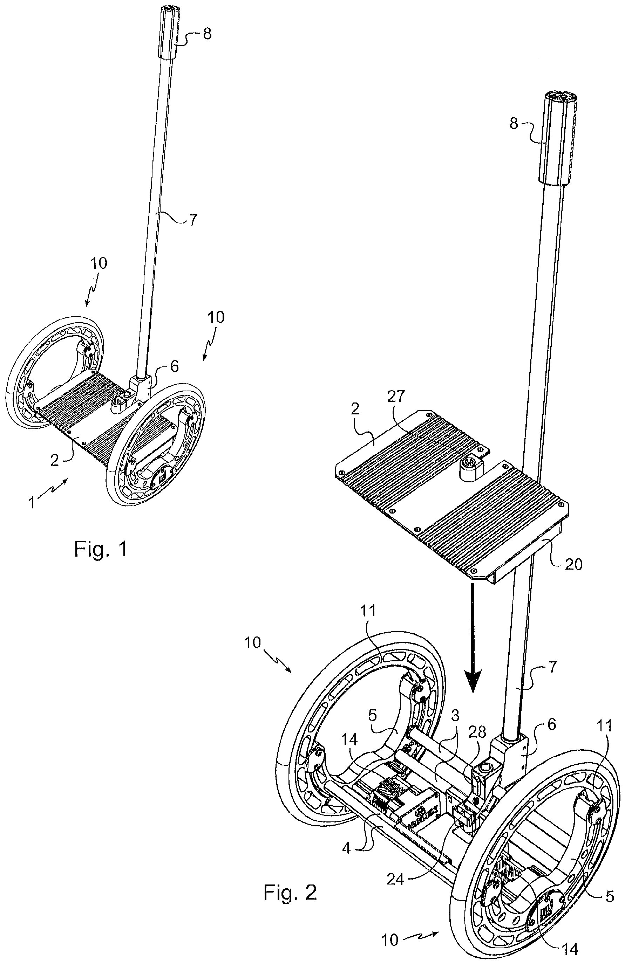

- La figure 1 est une vue en perspective d'un gyropode selon un mode particulier de l'invention,
- La figure 2 est une vue similaire à celle de la figure 1, le boîtier étant en cours de mise en place ;

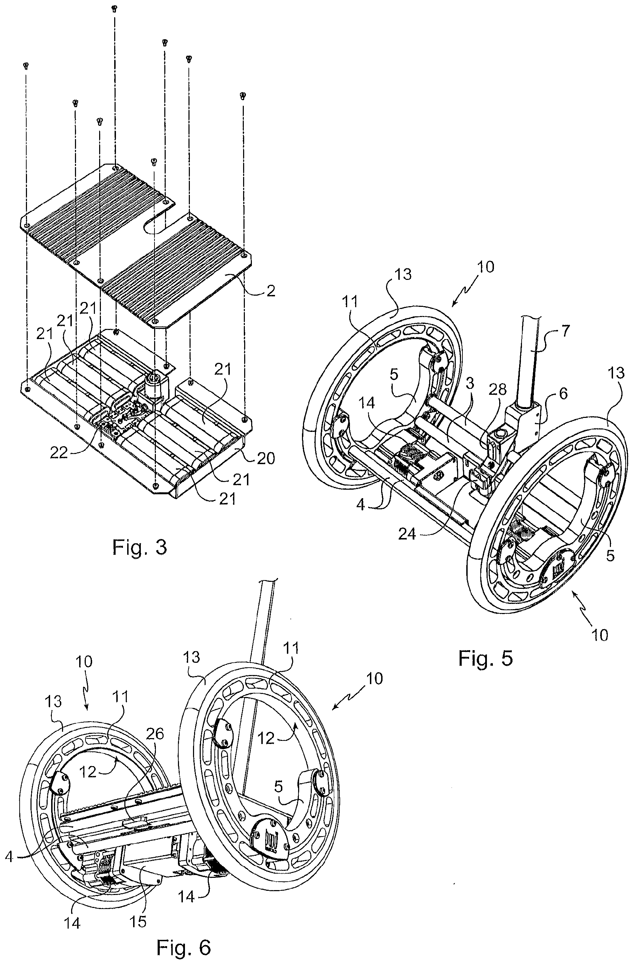

- La figure 3 est une vue en perspective éclatée du boîtier de la figure 2 ;
- Les figures 4a ,4b sont des vues en perspective du boîtier de la figure 2 ;
- La figure 5 est une vue en perspective de dessus du gyropode de la figure 1, sans le boîtier ;
- La figure 6 est une vue en perspective de dessous du gyropode de la figure 1, avec le boîtier ;
- La figure 7 est une vue en perspective agrandie du gyropode, sans le boîtier ;
- La figure 8 est un schéma-bloc d'un boîtier selon l'invention

### DESCRIPTION DETAILLEE D'UN MODE PARTICULIER DE REALISATION

L'invention est ici décrite en application à un gyropode du type de celui illustré dans le document FR 2 976 548. Il est cependant évident que l'invention s'applique à d'autres types de gyropodes à deux roues de structure plus conventionnelle.

En référence aux figures, le gyropode de l'invention comporte une plateforme 1 comportant un marchepied 2. Le marchepied 2 vient reposer sur une structure comportant deux traverses postérieures 3 et deux traverses antérieures 4 qui s'étendent entre des supports 5 en forme de croissant en étant fixées par leurs extrémités (par exemple par emmanchement à ces derniers). Les traverses postérieures 3 portent un ancrage 6 adapté à recevoir un manche 7 de maintien et de pilotage terminé par une poignée 8. L'ensemble formé par les traverses 3,4 et les supports 5 forme une structure rigide. En particulier, l'ancrage 6 peut être prévu pour être serré sur les deux traverses postérieures 3, ce qui limite fortement le vrillage de la structure. Les roues 10 comportent chacune une jante 11 portant extérieurement un organe de roulement 13 (par exemple un pneumatique ou un boudin plein en élastomère) et portent intérieurement une bande de roulement 12 (par exemple une bande élastomère) qui est ici reçue dans un chemin interne de la jante. Chacune des roues 10 est rapportée sur le support 5 correspondant de façon que la bande de roulement 12 s'étende en regard d'une face externe du support 5. Celui-ci est en forme générale de croissant et porte quatre paliers, ici des paliers lisses qui s'étendent en saillie de la face externe du support 5 associé pour ici coopérer avec la face interne de la jante et ses côtés pour la guider en rotation sur le support 5. L'entraînement des roues en rotation se fait par des moteurs 14 portés par les supports 5. Les moteurs 14 comportent chacun un arbre de sortie qui porte ici un galet (non visible ici) coopérant directement par friction avec la bande de roulement 12. Le rapport de réduction est naturellement important, ce qui évite tout recours à un réducteur. L'essentiel du poids de la plateforme 1 et du passager est transmis aux roues 10 par les galets, assurant ainsi un appui de ces derniers contre la bande de roulement 12 propre à garantir une bonne transmission de la puissance du moteur. Le gyropode comporte un boîtier électronique 15 de gestion des moteurs et de stabilisation du gyropode disposé entre les moteurs.

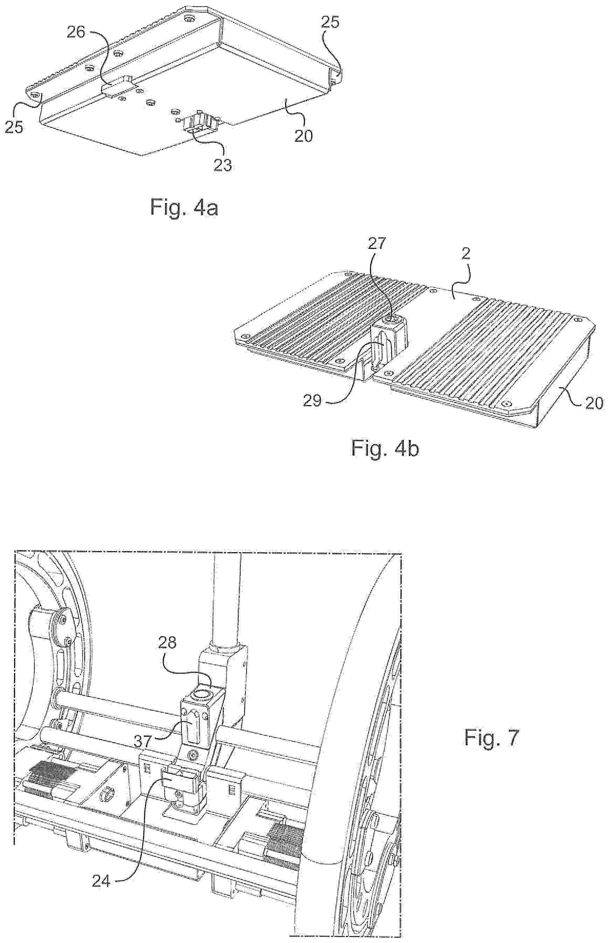

Selon l'invention, le marchepied 2 de la plateforme 1 est le couvercle d'un boîtier 20 renfermant une batterie (composée ici de six accumulateurs 21, composés chacun de 6 cellules) reliées à une carte centrale 22 reliée elle-même à un connecteur 23 (visible à la figure 4) destiné à coopérer avec un connecteur conforme 24 porté par un boîtier de connexion 28 accolé à l'ancrage 6 quand le boîtier est en place sur le gyropode, et par lequel le boîtier électronique 15 et les moteurs 14 sont alimentés.

Un connecteur 27 débouchant sur le dessus du boîtier 20 et accessible quand le boîtier 20 est en place sur le gyropode, permet le branchement d'un chargeur externe pour recharger les accumulateurs 21.

Le boîtier 20 a ici une forme de boîte parallélépipédique et est par exemple réalisé en tôle pliée. Il comporte ici deux plats 25 horizontaux s'étendant le long de ses grands côtés sur lesquels le marchepied 2 est ici vissé pour former un couvercle du boîtier 20. Lors de la mise en place du boîtier 20 sur le gyropode, une patte 26, située à la base du boîtier 20 au milieu de l'un des grands côtés sous l'un des plats, vient se placer sous la traverse antérieure 4 supérieure, puis, par un mouvement rotatif autour de ladite traverse, on vient appliquer le boîtier contre la traverse postérieure 3 supérieure, en enclenchant le connecteur 23 dans le connecteur 24. La connexion électrique des batteries avec le circuit électrique du gyropode est ainsi assurée automatiquement lors de la mise en place du boîtier 20.

On note ainsi que l'ensemble du marchepied 2 est formé par le seul couvercle du boîtier 20 et que le retrait ou la mise en place du boîtier 20 entraîne de façon correspondante le retrait ou la mise en place du couvercle et donc de tout le marchepied 2.

Le boîtier 20 repose ainsi par ses deux plats 25 sur les traverses supérieures, et tout mouvement latéral est empêché par coopération des flancs d'une encoche 29 (visible à la figure 4b) réalisée dans le carter recevant le connecteur 27 avec les flancs d'un bossage 37 visible à la figure 7 réalisé sur la face en regard du boîtier de connexion 28.

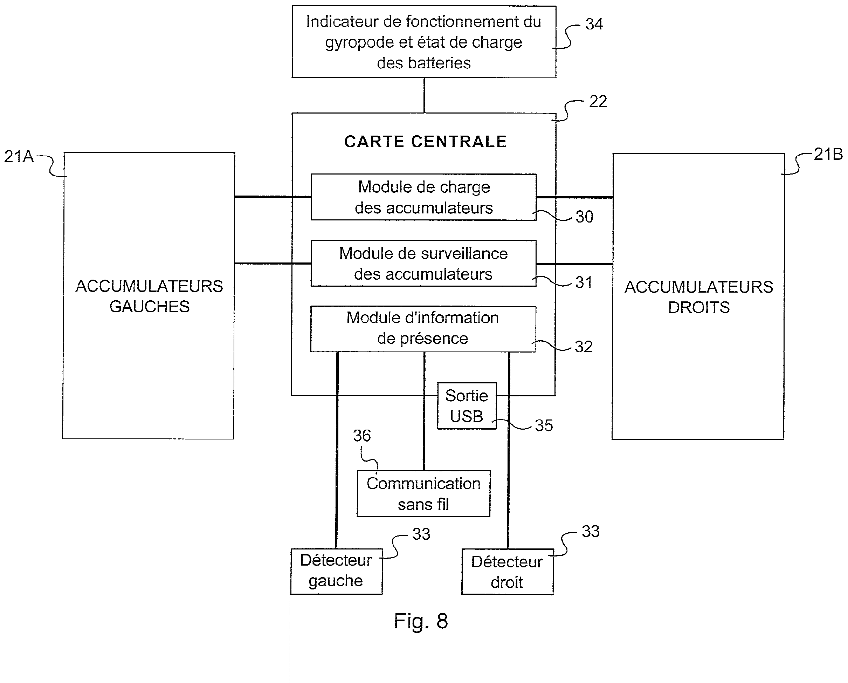

Comme illustré à la figure 8, le boîtier 20 renferme la batterie dont les accumulateurs 21 sont répartis en un groupe gauche 21A et un groupe droit 21B.

Les deux groupes 21A, 21B sont reliés à la carte centrale 22 qui porte un module de charge 30 des accumulateurs qui gère la charge de ceux-ci quand le boîtier 20 est relié à un chargeur externe par le connecteur 27. La carte centrale 22 porte également un module de surveillance 31 des accumulateurs surveillant en permanence leur niveau de charge et leur température pour détecter toute défaillance de l'un des accumulateurs. La carte centrale 22 comporte en outre un module d'information de présence 32 adapté à recevoir et traiter les signaux de deux détecteurs 33 placés directement sous le marchepied pour détecter si quelqu'un est monté sur le marchepied et autoriser en réponse l'alimentation des moteurs par les accumulateurs. La carte centrale 22 comporte également une sortie USB 35. Elle est associée à un module de communication sans fil 36 pour communiquer avec les autres cartes électroniques embarquées sur le gyropode, ou avec une station de retour. La carte centrale 22 gère un indicateur de fonctionnement et de l'état de charge des batteries 34, qui peut prendre la forme d'un affichage à LED visible par l'utilisateur en service.

L'invention n'est pas limitée à ce qui vient d'être décrit, mais englobe au contraire toute variante entrant dans le cadre défini par les revendications.

En particulier, bien qu'ici le boîtier qui renferme la batterie soit reçu sur des traverses, on pourra de façon plus générale prévoir toute structure permettant de recevoir un boîtier renfermant les batteries et dont le couvercle forme un marchepied du gyropode. Le boîtier pourra être réalisé en tôle pliée comme ici, ou par tout autre procédé, comme du thermoformage ou de l'injection plastique. Le marchepied pourra être vissé, clipsé, collé ... En outre, les roues du gyropode pourront, comme illustré ici, être disposées sur les flancs de la plateforme, mais pourront être également être disposées sous la plateforme, en étant entrainées directement comme ici par un galet coopérant avec la jante de la roue, ou par leur moyeu par l'intermédiaire d'un réducteur, comme sur d'autres gyropodes connus. Enfin, bien que la carte centrale 22 du boîtier 20 comporte des modules de charge et de surveillance des accumulateurs du pack de batterie, ainsi qu'un module d'information de présence, on pourra y adjoindre d'autres moules ou organes électroniques, comme l'organe de stabilisation gyroscopique, un module GPS, un module de mémorisation des trajets, un module d'autodirection.

## Revendications

1. Gyropode comportant une plateforme (1), deux roues latérales (10) ainsi qu'un organe de stabilisation gyroscopique (15) agissant sur des moteurs (14) d'entraînement des roues pour assurer l'équilibre et le déplacement du gyropode, **caractérisé en ce qu'**il comporte un boîtier (20) recevant une batterie (21) d'alimentation des moteurs et fermé par un couvercle, le boîtier étant reçu de façon amovible sur la plateforme du gyropode de sorte que le couvercle forme un marchepied (2) du gyropode sur lequel l'utilisateur monte en service.

2. Gyropode selon la revendication 1, dans lequel chacune des roues (10) comporte une jante (11) qui coopère avec des paliers portés par des supports (5) respectifs en forme de croissant qui s'étendent chacun essentiellement en regard de la jante associée et qui portent le moteur d'entraînement (14) associé de sorte que celui-ci entraîne la roue associée en agissant sur la jante, les supports s'étendant sur les côtés de la plateforme et étant reliés entre eux par des traverses (3,4) qui portent le boîtier (20).

3. Gyropode selon la revendication 2, dans lequel le boîtier (20) comporte deux plats (25) le long de ses grands côtés qui reposent en service sur les traverses.

4. Gyropode selon la revendication 3, dans lequel le boîtier (20) comporte une patte (26) à la base du boîtier, sous l'un des plats, destinée à être insérée sous l'une des traverses.

5. Gyropode selon la revendication 1, dans lequel le boîtier (20) comporte un connecteur (23) qui vient coopérer avec un connecteur (24) conforme porté par la plateforme (1) et par lequel les moteurs (14) sont alimentés lors de la mise en place du boîtier sur le gyropode.

6. Gyropode selon la revendication 1, dans lequel le boîtier (20) comporte un module de gestion de charge (30) d'accumulateurs (21) de la batterie.

7. Gyropode selon la revendication 1, dans lequel le boîtier (20) comporte un module de surveillance (31) d'accumulateurs (21) de la batterie.

8. Gyropode selon la revendication 1, dans lequel le boîtier (20) comporte un module d'information de présence (32) collaborant avec deux détecteurs(33) pour détecter la présence d'un utilisateur monté sur le marchepied et autorise en réponse l'alimentation des moteurs par la batterie.

## Patentansprüche

1. Selbstausgleichender Roller, umfassend eine Plattform (1), zwei seitliche Räder (10) sowie ein gyroskopisches Stabilisierungsorgan (15), das auf Antriebsmotoren (14) zum Antrieb der Räder einwirkt, um das Gleichgewicht und die Bewegung des selbstausgleichenden Rollers sicherzustellen, **dadurch gekennzeichnet, dass** er ein Gehäuse (20) umfasst, das eine Batterie (21) zur Versorgung der Motoren aufnimmt und durch eine Abdeckung verschlossen ist, wobei das Gehäuse auf lösbare Weise derart an der Plattform des selbstausgleichenden Rollers aufgenommen ist, dass die Abdeckung ein Trittbrett (2) des selbstausgleichenden Rollers bildet, auf das der Nutzer im Gebrauch steigt.

2. Selbstausgleichender Roller nach Anspruch 1, bei dem jedes der Räder (10) eine Felge (11) umfasst, die mit Lagern zusammenwirkt, die von jeweiligen halbmondförmigen Trägern (5) getragen werden, die sich jeweils im Wesentlichen gegenüber der dazugehörigen Felge erstrecken und die den dazugehörigen Antriebsmotor (14) derart tragen, dass dieser das dazugehörige Rad antreibt, indem er auf die Felge einwirkt, wobei sich die Träger auf den Seiten der Plattform erstrecken und miteinander über Querträger (3, 4) verbunden sind, die das Gehäuse (20) tragen.

3. Selbstausgleichender Roller nach Anspruch 2, bei dem das Gehäuse (20) zwei flache Teile (25) entlang seiner großen Seiten umfasst, die im Gebrauch auf den Querträgern ruhen.

4. Selbstausgleichender Roller nach Anspruch 3, bei dem das Gehäuse (20) eine Lasche (26) an der Basis des Gehäuses unter einem der flachen Teile umfasst, die dazu bestimmt ist, unter einem der Querträger eingefügt zu werden.

5. Selbstausgleichender Roller nach Anspruch 1, bei dem das Gehäuse (20) einen Verbinder (23) umfasst, der mit einem konformen Verbinder (24) zusammenarbeiten wird, der von der Plattform (1) getragen wird, und durch den die Motoren (14) während des Platzierens des Gehäuses auf dem selbstausgleichenden Roller versorgt werden.

6. Selbstausgleichender Roller nach Anspruch 1, bei dem das Gehäuse (20) ein Ladungsverwaltungsmodul (30) zur Ladungsverwaltung von Akkumulatoren (21) der Batterie umfasst.

7. Selbstausgleichender Roller nach Anspruch 1, bei dem das Gehäuse (20) ein Überwachungsmodul (31) zum Überwachen der Akkumulatoren (21) der Batterie umfasst.

8. Selbstausgleichender Roller nach Anspruch 1, bei dem das Gehäuse (20) ein Anwesenheitsinformationsmodul (32) umfasst, das mit zwei Detektoren (33) zusammenarbeitet, um die Anwesenheit eines auf das Trittbrett gestiegenen Nutzers zu erfassen und in Antwort darauf die Versorgung der Motoren durch die Batterie zu gewährleisten.

## Claims

1. A self balancing human transporter comprising a platform (1), two lateral wheels (10) and a gyroscopic stabilizing member (15) acting on wheel-driving motors (14) to ensure the balance and the movement of the self balancing human transporter , **characterized in that** it comprises a housing (20) receiving a battery (21) powering the motors and closed by a lid, the housing being removably received on the platform of the self balancing human transporter such that the lid forms a footrest (2) of the self balancing human transporter on which the user climbs when in service.

2. The self balancing human transporter as claimed in claim 1, in which each of the wheels (10) comprises a rim (11) which cooperates with bearings borne by crescent-shaped respective supports (5) which each extend essentially facing the associated rim and which the associated driving motor (14) such that the latter drives the associated wheel by acting on the rim, the supports extending on the sides of the platform and being linked to one another by crossmembers (3,4) which bear the housing (20).

3. The self balancing human transporter as claimed in claim 2, in which the housing (20) comprises two flats (25) along its large sides which rest in service on the crossmembers.

4. The self balancing human transporter as claimed in claim 3, in which the housing (20) comprises a tab (26) at the base of the housing, under one of the flats, intended to be inserted under one of the crossmembers.

5. The self balancing human transporter as claimed in claim 1, in which the housing (20) comprises a connector (23) which cooperates with a conformal connector (24) borne by the platform (1) and by which the motors (14) are powered when the housing is placed on the self balancing human transporter .

6. The self balancing human transporter as claimed in claim 1, in which the housing (20) comprises a module for managing the charge (30) of storage cells (21) of the battery.

7. The self balancing human transporter as claimed in claim 1, in which the housing (20) comprises a module (31) for monitoring storage cells (21) of the battery.

8. The self balancing human transporter as claimed in claim 1, in which the housing (20) comprises a presence information module (32) collaborating with two detectors (33) to detect the presence of a user standing on the footrest and in response authorizes the powering of the motors by the battery.
